(19) 

**Europäisches Patentamt**
**European Patent Office**
**Office européen des brevets**

(11) **EP 4 738 813 A1**

(12) **EUROPEAN PATENT APPLICATION**

(43) Date of publication:
**06.05.2026 Bulletin 2026/19**

(51) International Patent Classification (IPC):
***H04N 9/67*** *(2023.01)* ***H04N 9/68*** *(2023.01)*

(21) Application number: **24306832.7**

(22) Date of filing: **31.10.2024**

(52) Cooperative Patent Classification (CPC):
**H04N 9/67; H04N 9/68**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **LE NAOUR, Robin**
  **35510 CESSON-SEVIGNE (FR)**
• **TOUZE, David**
  **35200 RENNES (FR)**
• **MORVAN, Patrick**
  **35890 LAILLE (FR)**
• **CARAMELLI, Nicolas**
  **35700 RENNES (FR)**

(74) Representative: **Interdigital**
  **Immeuble ZEN 2**
  **845 A, avenue des Champs Blancs**
  **35510 Cesson-Sévigné (FR)**

(54) **LIMITATION OF A QUANTIZATION EFFECT WHEN EXCHANGING VIDEO CONTENT USING A CHANNEL WITH DIFFERENT COLOR GAMUTS BY YUV ADJUSTMENT**

(57)     A method comprising:
obtaining (900) YUV data resulting from a conversion of a YUV signal with a first transfer function and a first color gamut to a YUV signal with a second transfer function and a second color gamut; and applying a correction to a component of the YUV data to limit effects of quantization errors.

| |
|---|
| Obtain YUV data — 900 |
| Compute target RGB data — 901 |
| Quantize YUV — 902 |
| Compute quantizated RGB data — 903 |
| Evaluate error — 904 |
| Select RGB channel to correct — 905 |
| Compute channel correction function — 906 |
| Determine a correction per YUV channel — 907 |
| Select channel for correction — 908 |
| Apply correction — 909 |

Fig. 9

**Description**

1. TECHNICAL FIELD

At least one of the present embodiments generally relates to the field of production of video and more particularly to a method, a device and a system for limiting effects of quantization in a conversion of a video content from a first color gamut to a second color gamut.

2. BACKGROUND

In a typical video system, many different video devices are interconnected to exchange video data. However, these devices may be designed to use different formats. A format conversion is therefore required to insure interoperability between the various devices.

For example, the recent appearance of HDR (High Dynamic Range) systems offering video contents in a dynamic range greater than that of standard-dynamic-range video (SDR video) contents creates a need for such format conversion. Indeed, in the next years, HDR systems will coexists with SDR systems which implies a need for converting HDR video contents in SDR format and conversely SDR video contents in HDR format.

A SDR video content is typically using "8" bits or "10" bits YUV data with a BT.709 Opto-electrical transfer function (OETF) and a BT.709 color gamut, as described in the BT.709 recommendation (*Recommendation ITU-R BT.709-6, Parameter values for the HDTV standards for production and international program exchange, 06/2015)*

A HDR video content is typically using "10" bits or "12" bits YUV data with PQ or HLG Opto-electrical transfer function and BT.2020 color gamut as described in BT.2100 recommendation (*Recommendation ITU-R BT.2100-2, Image parameter values for high dynamic range television for use in production and international program exchange, 07/2018).*

In the digital domain, exchanged video data are generally quantized data, the quantization being introduced at least by a binary representation of original data. A color gamut conversion scheme comprises several operations performed in the real domain, i.e. in the set of real numbers R (or at least with a precision larger than the precision of the quantized data (i.e. using a floating-point domain)). For instance, converting a "8" bits or "10" bits YUV video content with a BT.709 OETF and a BT.709 color gamut into a "10" bits or "12" bits YUV video content with a PQ or HLG OETF and a BT.2020 color gamut (and vice versa) comprises a conversion from a quantized domain (for example "8" or "10" bits domain) to a real domain and then a conversion from the real domain to another quantized domain (for example "10" or "12" bits domain).

It is known that quantization introduces errors. Some operations performed during color gamut conversion may amplify these errors. These amplified errors may be significant, in particular, when a converted video content is converted back in its initial color gamut.

It is desirable to overcome the above drawbacks.

It is particularly desirable to propose a method limiting effects of quantization in a conversion of a video content from a first color gamut to a second color gamut.

3. BRIEF SUMMARY

In a first aspect, one or more of the present embodiments provide a method comprising:

obtaining YUV data resulting from a conversion of a YUV signal with a first transfer function and a first color gamut to a YUV signal with a second transfer function and a second color gamut;
converting the YUV data in first RGB data with the first transfer function and the first color gamut;
converting a quantized version of the YUV data into second RGB data with the first transfer function and the first color gamut;
determining an error vector between the first and the second RGB data;
selecting a channel of the first RGB data to correct from respective values of channels of the first RGB data;
determining a channel correction matrix from partial derivatives of a function allowing converting a YUV signal with the second transfer function and the second color gamut in a RGB signal with the first transfer function and the first color gamut;
determining a correction vector representing a correction per channel of the YUV data from the channel correction matrix and from a component of the error vector depending on the selected channel of the first RGB data to correct;
determining one channel of the YUV data to be corrected from a smallest value of component of the correction vector; and applying a correction corresponding to the smallest value to the determined channel of the YUV data.

In an embodiment, during the selecting of a channel of the first RGB data to correct from respective values of channels of the first RGB data, the selected channel corresponds to the channel of the first RGB data having a lowest value.

In an embodiment, the partial derivatives are computed with respect to channels Y, U and V of the YUV data.

In an embodiment, the selecting of a channel of the first RGB data to correct from respective values of channels of the first RGB data considers a relative position of the first RGB data from boundaries of the first color gamut.

In an embodiment, the determining of the correction vector comprises dividing the component of the error vector corresponding to the selected channel of the first RGB data to correct by a column of the channel correction matrix corresponding to the selected channel of the first RGB data to correct.

In an embodiment, the second color gamut is larger than the first color gamut.

In a second aspect, one or more of the present embodiments provide a device comprising electronic circuity configured for:

> obtaining YUV data resulting from a conversion of a YUV signal with a first transfer function and a first color gamut to a YUV signal with a second transfer function and a second color gamut;
> converting the YUV data in first RGB data with the first transfer function and the first color gamut;
> converting a quantized version of the YUV data into second RGB data with the first transfer function and the first color gamut;
> determining an error vector between the first and the second RGB data;
> selecting a channel of the first RGB data to correct from respective values of channels of the first RGB data;
> determining a channel correction matrix from partial derivatives of a function allowing converting a YUV signal with the second transfer function and the second color gamut in a RGB signal with the first transfer function and the first color gamut;
> determining a correction vector representing a correction per channel of the YUV data from the channel correction matrix and from a component of the error vector corresponding to the selected channel of the first RGB data to correct;
> determining one channel of the YUV data to be corrected from a smallest value of component of the correction vector;
> and applying a correction corresponding to the smallest value to the determined channel of the YUV data.

In an embodiment, during the selecting of a channel of the first RGB data to correct from respective values of channels of the first RGB data, the selected channel corresponds to the channel of the first RGB data having a lowest value

In an embodiment, the partial derivatives are computed with respect to channels Y, U and V of the YUV data.

In an embodiment, the selecting of a channel of the first RGB data to correct from respective values of channels of the first RGB data considers a relative position of the first RGB data from boundaries of the first color gamut.

In an embodiment, the determining of the correction vector comprises dividing the component of the error vector corresponding to the selected channel of the first RGB data to correct by a column of the channel correction matrix corresponding to the selected channel of the first RGB data to correct.

In an embodiment, the second color gamut is larger than the first color gamut.

In a third aspect, one or more of the present embodiments provide a computer program comprising program code instructions for implementing the method according to the first aspect.

In a fourth aspect, one or more of the present embodiments provide a non-transitory information storage medium storing program code instructions for implementing the method according to the first aspect.

4. BRIEF SUMMARY OF THE DRAWINGS

> Fig. 1 illustrates schematically an example of context in which the various embodiments are implemented;
> Fig. 2A illustrates schematically an example of hardware architecture of a processing module able to implement various aspects and embodiments;
> Fig. 2B illustrates a block diagram of an example of a first system in which various aspects and embodiments are implemented;
> Fig. 2C illustrates a block diagram of an example of a second system in which various aspects and embodiments are implemented;
> Fig. 3 illustrates a comparison of BT.709 and BT.2020 color gamuts;
> Fig. 4A illustrates schematically a conversion of a YUV signal with a given Transfer function and given color gamut to a YUV signal with another transfer function and another color gamut;
> Fig. 4B illustrates schematically a second example of conversion of a YUV signal with a given transfer function and given color gamut to a YUV signal with another transfer function and another color gamut.
> Fig. 5 illustrates schematically a conversion of a YUV BT.1886 / BT.709 signal to a YUV PQ / BT.2020 signal and back to a YUV BT.1886 / BT.709 signal with and without quantization;

Fig. 6 illustrates numerically an example of a conversion with and without quantization;

Fig. 7 illustrates a linear to BT.1886 transfer function in the [0..1023] range;

Fig. 8 illustrates a BT.1886 to linear transfer function in the [0..1023] range;

Fig. 9 illustrates a process for limiting the effects of quantization in a method for converting a first YUV signal with a first transfer function and a first color gamut to a YUV signal with a second transfer function and a second color gamut; and,

Fig. 10 provides an illustration of the process for limiting the effects of quantization.

## 5. DETAILED DESCRIPTION

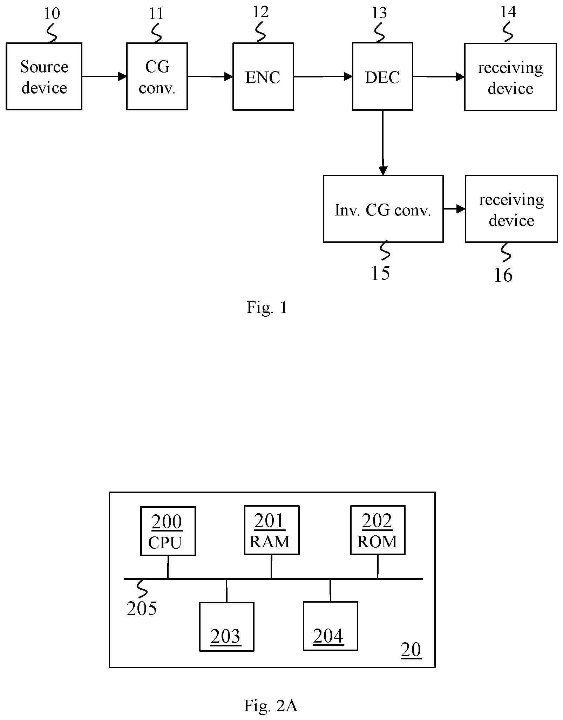

**Fig. 1** illustrates an example of context in which the various embodiments are implemented.

In Fig. 1, a source device 10, such as a camera or a streaming system providing a video content, provides an input video content to a color gamut conversion module 11. The source device 10 is for instance a SDR camera generating a SDR content in a first format corresponding to "8" bits YUV data with a BT.709 OETF and a BT.709 color gamut.

The color gamut conversion module 11 converts the input video content from the first format to a second format. The second format corresponds for example to "12" bits YUV data with a PQ or HLG OETF and a BT.2020 color gamut. As already mentioned, the conversion applied in the color gamut conversion module 11 comprises operations performed in the real domain which implies a conversion from the "8" bits domain (quantized) to the real domain (not quantized) followed by a conversion from the real domain to the "12" bits domain (quantized).

Once converted, the SDR video content in the second format is provided to an encoding system 12. The encoding system 12 comprises for example an inverse tone mapping (ITM) module and a video encoder. The ITM module generates a HDR video content in the second format from the SDR video content in the second format. The HDR video content is then encoded by the video encoder in a bitstream using a video compression format such as AVC ((ISO/CEI 14496-10 / ITU-T H.264), HEVC (ISO/IEC 23008-2 - MPEG-H Part 2, High Efficiency Video Coding / ITU-T H.265)), VVC (ISO/IEC 23090-3 - MPEG-I, Versatile Video Coding/ ITU-T H.266), AV1,VP9, EVC (ISO/CEI 23094-1 Essential Video Coding) or any other video compression format adapted to encode HDR video contents. The output of the encoding system 12 is a bitstream (i.e., is video data) representing the encoded HDR video content. It is to be noted that the encoding process applied by the video encoder comprises a quantization.

The encoding system 12 then provides the bitstream to a decoding system 13 for instance via a network. The decoding system 13 comprises a video decoder adapted to decode the bitstream generated by the encoding system 12. The decoding system 13 provides a decoded version of the HDR video content to a receiving device 14. The HDR video content is in the second format. The receiving device 14 is for example, a display device capable of displaying video contents in the second format.

The decoding system 13 comprises also a tone mapping (TM) module. The TM module receives the decoded version of the HDR video content in the second format and generates a SDR content in the second format from the HDR content in the second format. The SDR content in the second format is then provided to an inverse color gamut conversion module 15.

The inverse color gamut conversion module 15 converts the SDR content in the second format into a SDR content in the first format. As in the color gamut conversion module 11, the conversion applied in the inverse color gamut conversion module 15 comprises operations performed in the real domain which implies a conversion from the "12" bits domain (quantized) to the real domain (not quantized) followed by a conversion from the real domain to the "8" bits domain (quantized). The various quantizations (in the color gamut conversion module 11, in the video encoder of the encoding system 12 and in the inverse color gamut conversion module 15) implies that output video content provided by the inverse color gamut conversion module 15 is a representation of the input video content with errors.

The SDR video content in the first format is provided to a receiving device 16. The receiving device 16 is for example, a display device capable of displaying video contents in the first format.

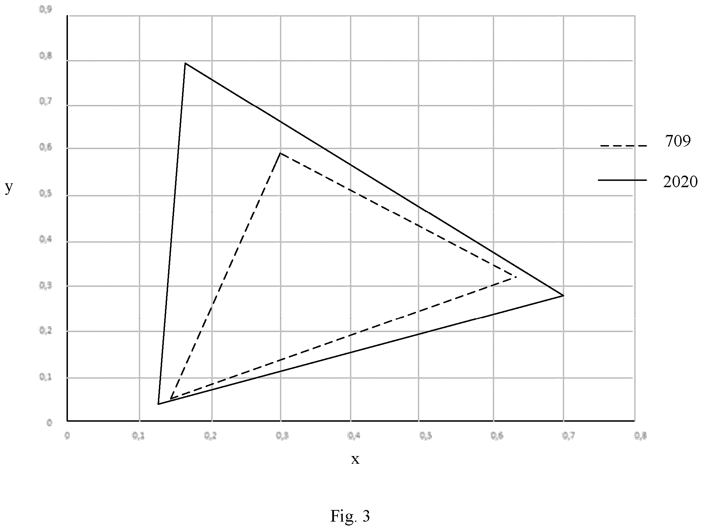

The above example uses BT. 2020 and BT. 709 color gamuts. BT.2020 is a wider color gamut than BT.709, i.e. it is able to encode more saturated colors, as shown in Fig. 3. **Fig. 3** illustrates a comparison of two-dimensional representations of the BT.709 and BT.2020 color gamuts.

**Fig. 2A** illustrates schematically an example of hardware architecture of a processing module 20 comprised at least in the color gamut conversion module 11 or in the inverse color gamut conversion module 15.

The processing module 20 comprises, connected by a communication bus 205: a processor or CPU (central processing unit) 200 encompassing one or more microprocessors, general purpose computers, special purpose computers, and processors based on a multi-core architecture, as non-limiting examples; a random access memory (RAM) 201; a read only memory (ROM) 202; a storage unit 203, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive, or a storage medium reader, such as a SD (secure digital) card reader and/or a hard disc drive (HDD) and/or a network accessible storage device; at least one communication interface 204 for exchanging data with other modules, devices, systems or equipment. The communication interface 204 can include, but is not limited to, a transceiver configured to transmit and to receive data over a communication network 21 (not represented in Fig. 2A). The communication interface 204 can include, but is not limited to, a modem or a network card.

For example, the communication interface 204 enables the processing module 20 to receive a SDR video content in a first format and to output a SDR video content in a second format.

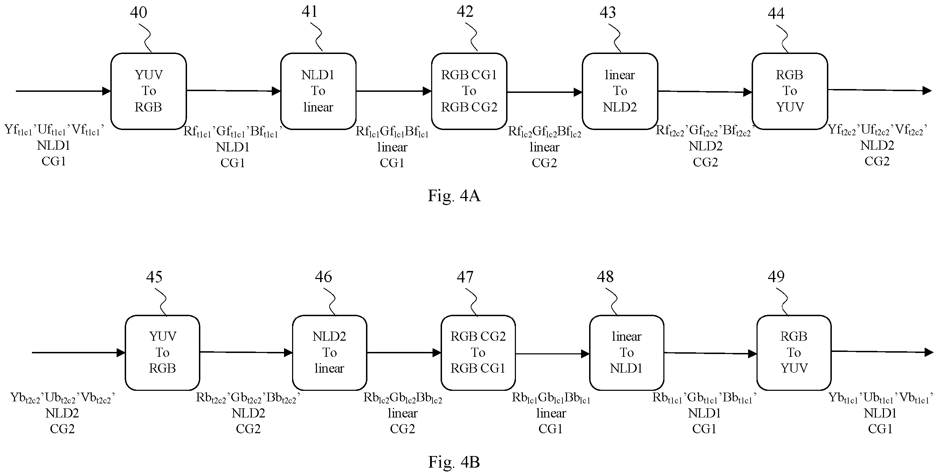

The processor 200 is capable of executing instructions loaded into the RAM 201 from the ROM 202, from an external memory (not shown), from a storage medium, or from a communication network. When the processing module 20 is powered up, the processor 200 is capable of reading instructions from the RAM 201 and executing them. These instructions form a computer program causing, for example, the implementation by the processor 200 of a process comprising the processes described in relation to Figs. 4A, 4B, 5, 6 and 9.

All or some of the algorithms and steps of these processes may be implemented in software form by the execution of a set of instructions by a programmable machine such as a DSP (digital signal processor) or a microcontroller, or be implemented in hardware form by a machine or a dedicated component such as a FPGA (field-programmable gate array) or an ASIC (application-specific integrated circuit). The processor 200, a DSP, a microcontroller, a FPGA and an ASIC are therefore examples of electronic circuitry adapted to implement the processes described in relation to Figs. 4A, 4B, 5, 6 and 9.

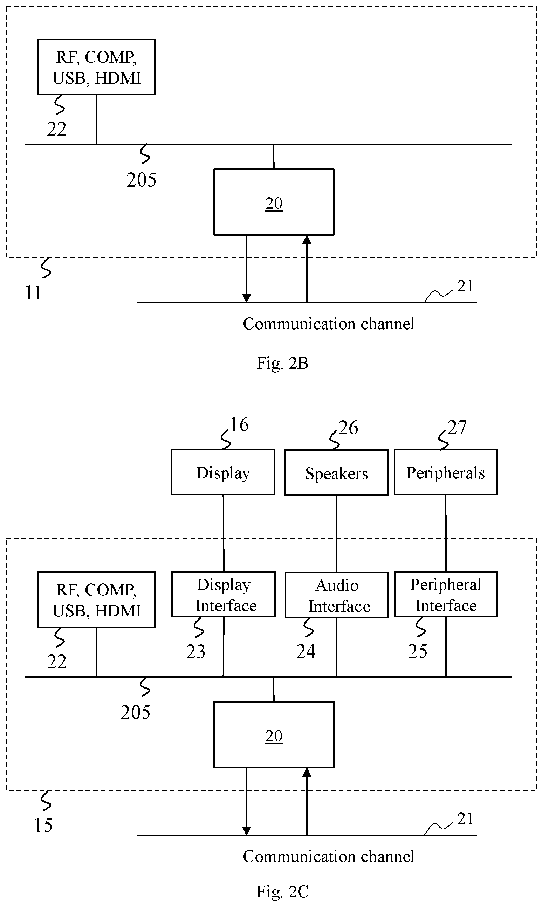

**Fig. 2C** illustrates a block diagram of an example of the inverse color gamut conversion module 15 in which various aspects and embodiments are implemented.

Inverse color gamut conversion module 15 can be embodied as a device including various components or modules and is configured to receive a decoded video content in a first color gamut (or the second format) and to generate a video content in a second color gamut (or in the first format). Examples of such system include, but are not limited to, various electronic systems such as a personal computer, a laptop computer, a smartphone, a tablet or a set top box. Components of the inverse color gamut conversion module 15, singly or in combination, can be embodied in a single integrated circuit (IC), multiple ICs, and/or discrete components. For example, in at least one embodiment, the inverse color gamut conversion module 15 comprises one processing module 20 that implements a conversion from a first format to a second format. In various embodiments, the inverse color gamut conversion module 15 is communicatively coupled to one or more other systems, or other electronic devices, via, for example, a communications bus or through dedicated input and/or output ports.

The input to the processing module 20 can be provided through various input modules as indicated in block 22. Such input modules include, but are not limited to, (i) a radio frequency (RF) module that receives an RF signal transmitted, for example, over the air by a broadcaster, (ii) a component (COMP) input module (or a set of COMP input modules), (iii) a Universal Serial Bus (USB) input module, and/or (iv) a High Definition Multimedia Interface (HDMI) input module. Other examples, not shown in Fig. 2C, include composite video.

In various embodiments, the input modules of block 22 have associated respective input processing elements as known in the art. For example, the RF module can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and bandlimited signal, (v) performing error correction, and (vi) demultiplexing to select the desired stream of data packets. The RF module of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF module includes an antenna.

Additionally, the USB and/or HDMI modules can include respective interface processors for connecting the inverse color gamut conversion module 15 to other electronic devices across USB and/or HDMI connections. It is to be understood that various aspects of input processing, for example, Reed-Solomon error correction, can be implemented, for example, within a separate input processing IC or within the processing module 20 as necessary. Similarly, aspects of USB or HDMI interface processing can be implemented within separate interface ICs or within the processing module 20 as necessary. The demodulated, error corrected, and demultiplexed stream is provided to the processing module 20.

Various elements of the inverse color gamut conversion module 15 can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the inverse color gamut conversion module 15, the processing module 20 is interconnected to other elements of the inverse color gamut conversion module 15 by the bus 205.

The communication interface 204 of the processing module 20 allows the inverse color gamut conversion module 15 to communicate on the communication network 21. The communication network 21 can be implemented, for example, within a wired and/or a wireless medium.

Data is streamed, or otherwise provided, to the inverse color gamut conversion module 15, in various embodiments, using a wireless network such as a Wi-Fi network, for example IEEE 802.11 (IEEE refers to the Institute of Electrical and Electronics Engineers). The Wi-Fi signal of these embodiments is received over the communications network 21 and the communications interface 204 which are adapted for Wi-Fi communications. The communications network 21 of these embodiments is typically connected to an access point or router that provides access to external networks including the Internet for allowing streaming applications and other over-the-top communications. Still other embodiments provide streamed data to the inverse color gamut conversion module 15 using the RF connection of the input block 22. As indicated above, various embodiments provide data in a non-streaming manner, for example, when the inverse color gamut conversion module 15 is a smartphone or a tablet. Additionally, various embodiments use wireless networks other than Wi-Fi, for example a cellular network or a Bluetooth network.

The inverse color gamut conversion module 15 can provide an output signal to various output devices using the communication network 21 or the bus 205. For example, the inverse color gamut conversion module 15 can provide a video content in the first format to the receiving device 16.

The inverse color gamut conversion module 15 can provide an output signal to various output devices, including the receiving device 16, speakers 26, and other peripheral devices 27. The receiving device 16 could be a display device including one or more of, for example, a touchscreen display, an organic light-emitting diode (OLED) display, a curved display, and/or a foldable display. The receiving device 16 can be for a television, a tablet, a laptop, a smartphone (mobile phone), or other devices. The receiving device 16 can also be integrated with other components (for example, as in a smartphone or a tablet), or separate (for example, an external monitor for a laptop). The receiving device 16 is compatible with video contents in the second format. The other peripheral devices 27 include, in various examples of embodiments, one or more of a stand-alone digital video disc (or digital versatile disc) (DVR, for both terms), a disk player, a stereo system, and/or a lighting system. Various embodiments use one or more peripheral devices 27 that provide a function based on the output of the inverse color gamut conversion module 15. For example, a disk player performs the function of playing the output of the inverse color gamut conversion module 15.

In various embodiments, control signals are communicated between the inverse color gamut conversion module 15 and the receiving device 16, speakers 26, or other peripheral devices 27 using signaling such as AV.Link, Consumer Electronics Control (CEC), or other communications protocols that enable device-to-device control with or without user intervention. The output devices can be communicatively coupled to the inverse color gamut conversion module 15 via dedicated connections through respective interfaces. Alternatively, the output devices can be connected to the inverse color gamut conversion module 15 using the communication network 21 via the communication interface 204. The receiving device 16 and speakers 26 can be integrated in a single unit with the other components of the inverse color gamut conversion module 15 in an electronic device such as, for example, a television. In various embodiments, the display interface includes a display driver, such as, for example, a timing controller (T Con) chip.

The receiving device 16 and speakers 26 can alternatively be separate from one or more of the other components, for example, if the RF module of input block 22 is part of a separate set-top box. In various embodiments in which the receiving device 16 and speakers 26 are external components, the output signal can be provided via dedicated output connections, including, for example, HDMI ports, USB ports, or COMP outputs.

**Fig. 2B** illustrates a block diagram of an example of the color gamut conversion module 11 adapted to convert a video content from the first format (i.e. first color gamut) to the second format (i.e. second color gamut) in which various aspects and embodiments are implemented.

Color gamut conversion module 11 can be embodied as a device including the various components and modules described above and is configured to perform one or more of the aspects and embodiments described in this document.

Examples of such devices include, but are not limited to, various electronic devices such as personal computers, laptop computers, a camera, a smartphone and a server. Elements or modules of the color gamut conversion module 11, singly or in combination, can be embodied in a single integrated circuit (IC), multiple ICs, and/or discrete components. For example, in at least one embodiment, the color gamut conversion module 11 comprises one processing module 20 that implement a conversion from the first format to the second format. In various embodiments, the color gamut conversion module 11 is communicatively coupled to one or more other systems, or other electronic devices, via, for example, a communications bus or through dedicated input and/or output ports.

The input to the processing module 20 can be provided through various input modules as indicated in block 22 already described in relation to Fig. 2C.

Various elements of the color gamut conversion module 11 can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the color gamut conversion module 11, the processing module 20 is interconnected to other elements of said the color gamut conversion module 11 by the bus 205.

The communication interface 204 of the processing module 20 allows the color gamut conversion module 11 to communicate on the communication network 21. The communication network 21 can be implemented, for example, within a wired and/or a wireless medium.

Data is streamed, or otherwise provided, to the color gamut conversion module 11, in various embodiments, using a wireless network such as a Wi-Fi network, for example IEEE 802.11 (IEEE refers to the Institute of Electrical and Electronics Engineers). The Wi-Fi signal of these embodiments is received over the communications network 21 and the communications interface 204 which are adapted for Wi-Fi communications. The communications network 21 of these embodiments is typically connected to an access point or router that provides access to external networks including the Internet for allowing streaming applications and other over-the-top communications. Still other embodiments provide streamed data to the system A using the RF connection of the input block 22. As indicated above, various embodiments provide data in a non-streaming manner.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented, for example, in a processor, which refers to processing devices in general, including, for example, a computer, a microprocessor, an integrated circuit, or a programmable logic device. Processors also include communication devices, such as, for example, computers, smartphones (cell phones), portable/personal digital assistants ("PDAs"), tablets, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, retrieving the information from memory or obtaining the information for example from another device, module or from user.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', "one or more of" for example, in the cases of "A/B", "A and/or B" and "at least one of A and B", "one or more of A and B" is intended to encompass the selection of the first listed option (A) only, or the selection of the second listed option (B) only, or the selection of both options (A and B). As a further example, in the cases of "A, B, and/or C" and "at least one of A, B, and C", "one or more of A, B and C" such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations or embodiments can produce a variety of signals formatted to carry information that can be, for example, stored or transmitted. The information can include, for example, instructions for performing a method, or data produced by one of the described implementations or embodiments. For example, a signal can be formatted to carry a video content in the first or the second format of a described embodiment. Such a signal can be formatted, for example, as an electromagnetic wave (for example, using a radio frequency portion of spectrum) or as a baseband signal. The formatting can include, for example, encoding a video content in the first or the second format in an encoded stream (or bitstream) and modulating a carrier with the encoded stream. The information that the signal carries can be, for example, analog or digital information. The signal can be transmitted over a variety of different wired or wireless links, as is known. The signal can be stored on a processor-readable medium.

Various embodiments may refer to a bitstream. Bitstreams include, for example, any series or sequence of bits, and do not require that the bits be, for example, transmitted, received, or stored.

**Fig. 4A** illustrates schematically a first example of conversion of a YUV signal with a given transfer function and given color gamut to a YUV signal with another transfer function and another color gamut.

In Fig. 4A (and in the following Fig. 4B), any transform from a linear domain *LD* to a non-linear domain *NLDx* is called *OETF*. Any transform from a non-linear domain *NLDy* to the linear domain *LD* is called *EOTF* (Electro-Optical Transfer Function).

The conversion process described in relation to Fig. 4A is executed by the processing module 20 of the color gamut conversion module 11. In this example, the color gamut conversion module 11 receives input data in the form of a YUV video content. The input data are in a first color gamut *CG1* and correspond to a non-linear domain *NLD1*. The color gamut conversion module 11 then generates output data in the form of YUV video content. The output data are in a second color gamut *CG2* and correspond to a non-linear domain *NLD2*.

One can note that a YUV signal comprises a luminance component (or channel) Y (also noted y) and two chrominance components U (also noted u) and V (also noted v).

In a step 40, the processing module 20 converts the input YUV data $Yf_{t1c1}'Uf_{t1c1}'Vf_{t1c1}'$ (in the *CG1* color gamut and corresponding to the non-linear domain *NLD1*) into RGB data $Rf_{t1c1}'Gf_{t1c1}'Bf_{t1c1}'$ (also in the *CG1* color gamut and corresponding to the non-linear domain *NLD1*) using a YUV to RGB matrix adapted to the *CG1* color gamut.

One can note that a RGB signal comprises a red component (or channel) R (also noted r), a green component G (also noted g) and a blue component B (also noted b).

In a step 41, the processing module 20 converts the $Rf_{t1c1}'Gf_{t1c1}'Bf_{t1c1}'$ data to RGB data $Rf_{lc1}Gf_{lc1}Bf_{lc1}$ in the *CG1* color gamut but corresponding to the linear domain *LD* with no transfer function using a non-linear converter allowing a *NLD1* to linear *LD* conversion.

In a step 42, the processing module 20 converts the RGB data $Rf_{lc1}Gf_{lc1}Bf_{lc1}$ to RGB data $Rf_{lc2}Gf_{lc2}Bf_{lc2}$ in a CG2 color gamut while remaining in the linear domain *LD* with no transfer function using a RGB to RGB matrixial operation allowing a *CG1* to *CG2* color gamut conversion.

In a step 43, the processing module 20 converts the RGB data $Rf_{lc2}Gf_{lc2}Bf_{lc2}$ to a RGB data $Rf_{t2c2}'Gf_{t2c2}'Bf_{t2c2}'$ in the *CG2* color gamut and corresponding to a non-linear domain *NLD2* using a non-linear converter allowing a linear *LD* to *NLD2* conversion.

In a step 44, the processing module 20 converts the RGB data $Rf_{t2c2}'Gf_{t2c2}'Bf_{t2c2}'$ to YUV data $Yf_{t2c2}'Uf_{t2c2}'Vf_{t2c2}'$ in the CG2 color gamut and corresponding to the non-linear domain *NLD2* using a RGB to YUV matrixial operation adapted to the CG2 color gamut.

**Fig. 4B** illustrates schematically a second example of conversion of a YUV signal with a given transfer function and given color gamut to a YUV signal with another transfer function and another color gamut.

The conversion process described in relation to Fig. 4B is executed by the processing module 20 of the inverse color gamut conversion module 15. In this example, the inverse color gamut conversion module 15 receives input data in the form of a YUV video content. The input data are in the second color gamut *CG2* and correspond to the non-linear domain *NLD2*. The inverse color gamut conversion module 15 then generates output data in the form of YUV video content. The output data are in the first color gamut *CG1* and correspond to the non-linear domain *NLD1*. The conversion process of Fig. 4B is therefore the reverse of the process of Fig. 4A and allows regenerating YUV data in the color gamut *CG1* and corresponding to the domain *NLD1* from the YUV data outputted by the process of Fig. 4A.

In a step 45, the processing module 20 converts the input signal $Yb_{t2c2}'Ub_{t2c2}'Vb_{t2c2}'$ (in the *CG2* color gamut and corresponding to the non-linear domain *NLD2*) into RGB data $Rb_{t2c2}'Gb_{t2c2}'Bb_{t2c2}'$ (also in the *CG2* color gamut and corresponding to the non-linear domain *NLD2*) using a YUV to RGB matrixial operation adapted to the *CG2* color gamut.

In a step 46, the processing module 20 converts the $Rb_{t2c2}'Gb_{t2c2}'Bb_{t2c2}'$ data to RGB data $Rb_{lc2}Gb_{lc2}Bb_{lc2}'$ RGB in the *CG2* color gamut but corresponding to the linear domain independent of a transfer function using a non-linear converter allowing a *NLD2* to linear *LD* conversion.

In a step 47, the processing module 20 converts the RGB data $Rb_{lc2}Gb_{lc2}Bb_{lc2}$ to RGB data $Rb_{lc1}Gb_{lc1}Bb_{lc1}$ in the *CG1* color gamut while remaining in the linear domain *LD* with no transfer function using a RGB to RGB matrixial operation allowing a *CG2* to *CG1* color gamut conversion.

In a step 48, the processing module 20 converts the RGB data $Rb_{lc1}Gb_{lc1}Bb_{lc1}$ to a RGB data $Rb_{t1c1}'Gb_{t1c1}'Bb_{t1c1}'$ in the *CG1* color gamut and corresponding to the non-linear domain *NLD1* using a non-linear converter allowing a linear *LD* to *NLD1* conversion.

In a step 49, the processing module 20 converts the RGB data $Rb_{t1c1}'Gb_{t1c1}'Bb_{t1c1}'$ to YUV data $Yb_{t1\text{-}}$

$_{c1}$'$Ub_{t1c1}$'$Vb_{t1c1}$' in the CG1 color gamut and corresponding to the non-linear domain *NLD1* using a RGB to YUV matrixial operation adapted to the CG1 color gamut.

Generally, steps 40 to 49 are done in floating-point for a better accuracy and, at the end of the process, a quantization is performed to convert YUV floating-point values into YUV binary (integer) values. Such a quantization can be performed as follows for instance:

$$Vq = \text{INT}(V + 0.5) \qquad (1)$$

Where V is the floating-point value, *Vq* is the quantized value and INT() is a function that only keep the integer value of *V.*

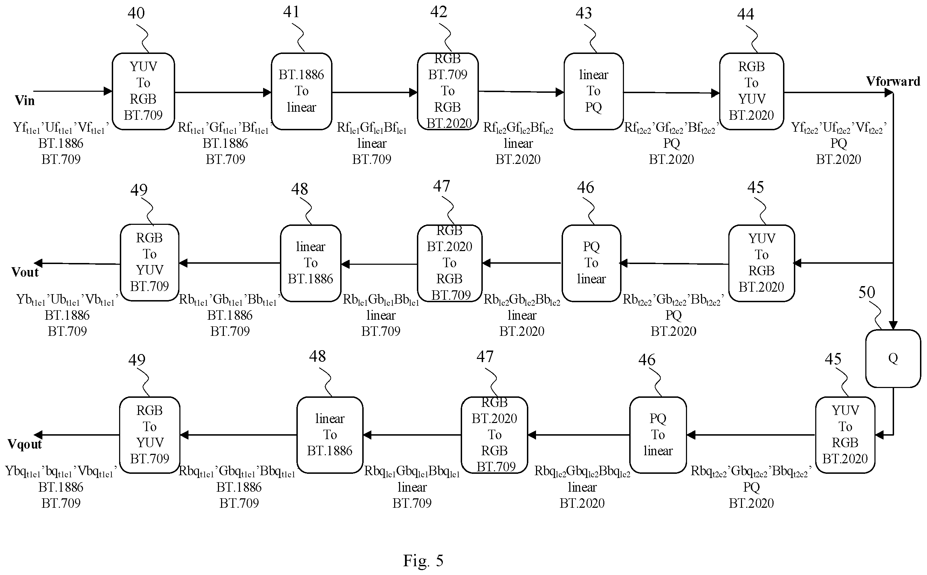

**Fig. 5** illustrates schematically a conversion of a YUV BT.1886 / BT.709 signal to a YUV PQ / BT.2020 signal and back to a YUV BT.1886 / BT.709 signal with and without quantization.

Keeping the notations of Figs. 4A and 4B:

- Step 41 uses the BT. 1886 EOTF;
- Step 43 uses the PQ inverse EOTF;
- CG1 is the BT. 709 color gamut;
- Step 46 uses the PQ EOTF;
- Step 48 uses the BT. 1886 inverse EOTF;
- CG2 is a BT. 2020 color gamut.

In that case, an input 10 bits YUV video content in the BT. 1886 non-linear domain and BT.709 color gamut (simply called *YUV BT.1886 / BT.709 video content*) is converted to an output 10 bits YUV video content in the PQ non-linear domain and BT.2020 color gamut (simply called *YUV PQ / BT.2020 video content*), but with an effective color gamut limited to BT.709. The output YUV PQ / BT.2020 video content is then converted back to a 10 bits YUV video content in the BT.709 color gamut and in the BT. 1886 non-linear domain representative of the input YUV BT.1886 / BT.709 video content.

As already mentioned in relation to Fig. 1, but also in relation to Figs. 4A, 4B and 5, the YUV video data outputted by the color gamut conversion module 11 (or by the encoding system 12 and the decoding system 13) are quantized. Each quantization introduces errors. The errors introduced by the binarization of floating-point data are generally small. However, these small errors can produce large errors when converting a video content obtained by conversion from a first format to a second format back to the first format (for example when converting the output YUV PQ / BT.2020 video content back to a 10 bits YUV video content in the BT.709 color gamut and in the BT. 1886 non-linear domain).

Fig. 5 represents the process of Fig. 4A in the top line followed by the process of Fig. 4B in the middle and in the bottom lines. The process of Fig. 4B in the bottom line differs from the process of Fig. 4B in the bottom line in that, the input of the process of the bottom line is a quantized version of the output of the process of the top line while the process of the middle line receives directly the output of the process of the top line.

The process of the top line could be for example executed by the processing module 20 of the color gamut conversion module 11.

The process of the bottom line could be for example executed by the processing module 20 of the inverse color gamut conversion module 15.

The process of the middle line is purely illustrative and hypothetical since, in real conditions, the process of Fig. 4B never receives non-quantized data. In the example of Fig. 5 we consider that this process is executed by a processing module 20.

In the example of Fig. 5, the input video content *Vin* is a 10 bits YUV BT.1886 / BT.709 video content in Limited Range (Y values in [64-940] range, UV values in [64-960] range).

In step 40, the processing module 20 converts the input data $Yf_{t1c1}$'$Uf_{t1c1}$'$Vf_{t1c1}$' (noted simply Y, U and V in the following matrixial operation) into RGB data $Rf_{t1c1}$'$Gf_{t1c1}$'$Bf_{t1c1}$' (noted simply R, G and B in the following matrixial operation) using a YUV to RGB matrixial operation M1 as follows:

$$M1: \begin{bmatrix} R \\ G \\ B \end{bmatrix} = \begin{bmatrix} 1.167808 & 0 & 1.798014 \\ 1.167808 & -0.21388 & -0.53448 \\ 1.167808 & 2.118649 & 0 \end{bmatrix} \begin{bmatrix} Y \\ U \\ V \end{bmatrix} + \begin{bmatrix} -995.323 \\ 308.4235 \\ -1159.49 \end{bmatrix}$$

The output is a RGB BT.1886 / BT.709 video content in Full Range (the RGB values are in the [0..1023] range) and floating-point format.

In step 41, the processing module 20 uses a BT.1886 EOTF *TF1*, to convert the $Rf_{t1c1}$'$Gf_{t1c1}$'$Bf_{t1c1}$' data (noted *RGBin* in the following equation) into the $Rf_{lc1}Gf_{lc1}Bf_{lc1}$ data (noted *RGBout* in the following equation). The BT.1886 EOTF *TF1* is as follows:

$$RGBout = \text{TF1}(RGBin) = \left(\frac{RGBin}{1023}\right)^{2.4} \times 1023$$

The output of step 41 is RGB data in the BT. 709 color gamut and in the linear domain in Full Range (the RGB values are in [0..1023] range) and floating-point format.

In step 42, the processing module 20 converts the RGB data $Rf_{lc1}Gf_{lc1}Bf_{lc1}$ to the RGB data $Rf_{lc2}Gf_{lc2}Bf_{lc2}$ from the BT. 709 color gamut to the BT. 2020 color gamut using a matrix M2:

$$M2 = \begin{bmatrix} 0.627404 & 0.329283 & 0.043313 \\ 0.069097 & 0.91954 & 0.011362 \\ 0.016391 & 0.088013 & 0.895595 \end{bmatrix}$$

The output of step 42 is RGB data in the BT. 2020 color gamut and in the linear domain in Full Range (the RGB values are in [0..1023] range) and floating-point format.

In step 43, the processing module 20 converts the RGB data $Rf_{lc2}Gf_{lc2}Bf_{lc2}$ to the RGB data $Rf_{t2c2}'Gf_{t2c2}'Bf_{t2c2}'$ using a linear to PQ transform *TF2.* The linear to PQ transform *TF2* corresponds to the inverse EOTF function detailed in table 4 of document *Recommendation ITU-R BT.2100-2, Image parameter values for high dynamic range television for use in production and international program exchange, 07/2018.*

In step 44, the processing module 20 converts the RGB data $Rf_{t2c2}'Gf_{t2c2}'Bf_{t2c2}'$ to the YUV data $Yf_{t2c2}'Uf_{t2c2}'Vf_{t2c2}'$ using a RGB to YUV matrixial operation M3:

$$M3: \begin{bmatrix} Y \\ U \\ V \end{bmatrix} = \begin{bmatrix} 0.224951 & 0.580575 & 0.050779 \\ -0.1223 & -0.31563 & 0.437928 \\ 0.437928 & -0.40271 & -0.03522 \end{bmatrix} \begin{bmatrix} R \\ G \\ B \end{bmatrix} + \begin{bmatrix} 64 \\ 512 \\ 512 \end{bmatrix}$$

The output of step 44 is a YUV PQ / BT.2020 video content *Vforward* in Limited Range (Y values in [64-940] range, UV values in [64-960] range) and floating-point format.

In step 45, the processing module 20 converts the input data $Yb_{t2c2}'Ub_{t2c2}'Vb_{t2c2}'$ (noted simply *Y, U* and *V* in the following equation) into the RGB data $Rb_{t2c2}'Gb_{t2c2}'Bb_{t2c2}'$ (noted simply *R, G* and *B* in the following equation) using a YUV to RGB matrixial operation M4:

$$M4: \begin{bmatrix} R \\ G \\ B \end{bmatrix} = \begin{bmatrix} 1.167808 & 0 & 1.683611 \\ 1.167808 & -0.18787 & -0.65233 \\ 1.167808 & 2.148072 & 0 \end{bmatrix} \begin{bmatrix} Y \\ U \\ V \end{bmatrix} + \begin{bmatrix} -936.749 \\ 355.4464 \\ -1174.55 \end{bmatrix}$$

The output is a RGB PQ / BT.2020 video content in Full Range (RGB values in [0..1023] range) and floating-point format.

In step 46, the processing module 20 converts the data $Rb_{t2c2}'Gb_{t2c2}'Bb_{t2c2}'$ data into the data $Rb_{lc2}Gb_{lc2}Bb_{lc2}$ using a non-linear transform *TF3.* The non-linear transform *TF3* is the EOTF detailed in table 4 of document *Recommendation ITU-R BT.2100-2,*

*Image parameter values for high dynamic range television for use in production and international program exchange, 07/2018.* The output of step 46 is RGB data in the BT. 2020 color gamut and in the linear domain in Full Range (RGB values in [0..1023] range) and floating-point format.

In step 47, the processing module 20 converts the RGB data $Rb_{lc2}Gb_{lc2}Bb_{lc2}$ to the RGB data $Rb_{lc1}Gb_{lc1}Bb_{lc1}$ using a RGB to RGB matrix M5:

$$M5 = \begin{bmatrix} 1.660491 & -0.58764 & -0.07285 \\ -0.12455 & 1.1329 & -0.00835 \\ -0.01815 & -0.10058 & 1.11873 \end{bmatrix}$$

The output of step 47 is RGB data in the BT.709 color gamut and in the linear domain in Full Range (RGB values in [0..1023] range) and floating-point format.

In step 48, the processing module 20 converts the RGB data $Rb_{lc1}Gb_{lc1}Bb_{lc1}$ (noted simply *RGBin* in the following equation) to the RGB data $Rb_{t1c1}'Gb_{t1c1}'Bb_{t1c1}'$ (noted *RGBout* in the following equation) using a non-linear transform (i.e. BT.1886 inverse EOTF) *TF4:*

$$RGBout = \mathrm{TF4}(RGBin) = \left(\frac{RGBin}{1023}\right)^{1/2.4} \times 1023$$

The output of step 48 is RGB data in the BT. 709 color gamut and in the BT. 1886 non-linear domain in Full Range (the RGB values are in [0..1023] range) and floating-point format.

In step 49, the processing module 20 converts the RGB data $Rb_{t1c1}'Gb_{t1c1}'Bb_{t1c1}'$ to the YUV data $Yb_{t1c1}'Ub_{t1c1},'Vb_{t1c1}'$ using a RGB to YUV matrixial operation *M6*:

$$M6: \begin{bmatrix} Y \\ U \\ V \end{bmatrix} = \begin{bmatrix} 0.18205 & 0.612429 & 0.061825 \\ -0.10035 & -0.33758 & 0.437928 \\ 0.437928 & -0.39777 & -0.04016 \end{bmatrix} \begin{bmatrix} R \\ G \\ B \end{bmatrix} + \begin{bmatrix} 64 \\ 512 \\ 512 \end{bmatrix}$$

The output is a YUV BT.1886 / BT.709 video content in Limited Range (Y values in [64-940] range, UV values in [64-960] range) and floating-point format.

Fig. 5 comprises a step 50 corresponding to a quantization. The quantization is for instance the one represented by equation (1) above. The output of step 50 is representative of the output of the color gamut conversion module 11.

In Fig. 5, the process of Fig. 4B results in two different outputs:

- A video content *Vout* when the input of the process of Fig. 4B is the video content *Vforward;*
- A video content *Vqout* when the input of the process of Fig. 4B is a quantized version of the video content *Vforward* outputted by step 50.

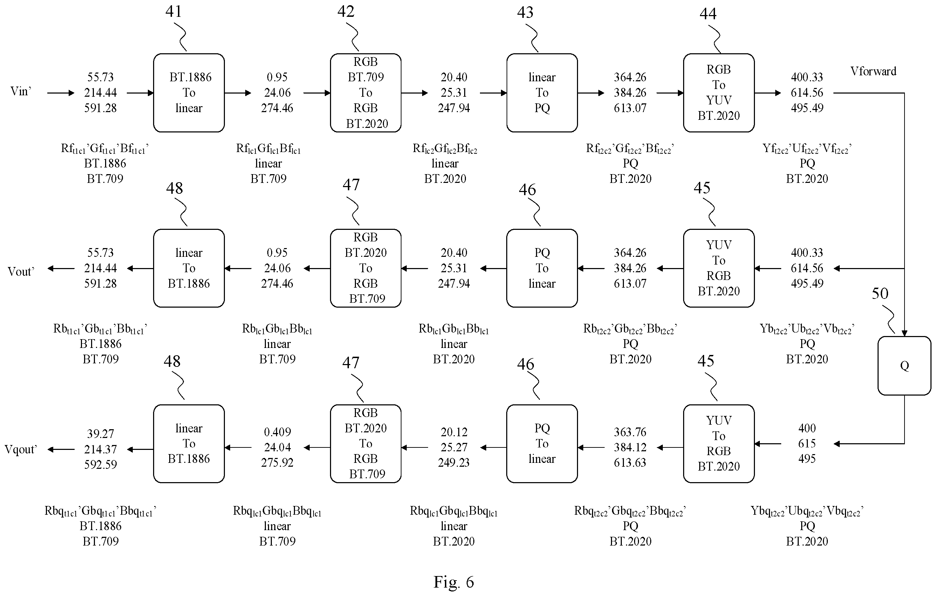

**Fig. 6** illustrates an example of a conversion with and without quantization. This example illustrates numerically the effect of a color gamut conversion process on a data affected by quantization errors. In Fig. 6, steps 40 and 49 were omitted to represent only operations in the RGB domain. The process described in relation to Fig. 6 is applied to an input value *Vin'* equal to (R = 55.73, G = 214.44, V = 591.28).

In this example, one can notice that:

- Without quantization of *Vforward,* the backward conversion using floating-point computation outputs a video content *Vout'* identical to the video content *Vin'.*

- When a quantization is applied to *Vforward,* the backward conversion using floating-point computation outputs a video content *Vqout* with noticeable differences:

  ○ error on R = 16.46;
  ○ error on G = 0.07;
  ○ error on B = 1.31.

This means that a small error introduced by a quantization introduces a noticeable modification on the reconstructed video content *Vqout'* which is not acceptable in many applications. There is a need to find a solution to lower or cancel the error induced by the quantization.

As can be noticed from Figs. 5 and 6, the error introduced by the quantization has a small and neglectable effect on the YUV data $Ybqt2c2'Ubqt2c2'Vbqt2c2'$ (input of step 45 in the bottom line), $Rbqt2c2'Gbqt2c2'Bbqt2c2'$ (input of step 46 in the bottom line) and $Rbqlc1Gbqlc1Bbqlc1$ (input of step 47 in the bottom line).

However, at the output of step 47, one can notice a relatively important error on the component $Rbqlc2$ (i.e. 0.409 instead of 0.95 in the middle line without quantization). Even if this error is limited at this stage because the value is still below the "1" (relative to the [0..1023] range of the signal), as can be seen in Fig. 6, this error is amplified by the non-linear transform *TF4.* Indeed, one can notice that at the output of step 48 the error on the component $Rbqt2c2'$ is now very large compared to the original value (i.e. 39.27 instead of 55.73).

This observation can be generalized: when one of the components of the RGB data $Rflc1Gflc1Bflc1$ is small (i.e. well below "1"), an error introduced by a quantization on *Vforward* is amplified in step 47 in the RGB data $Rbqlc1Gbqlc1Bbqlc1$. This error introduces a far larger amplification in step 48 on the RGB data $Rbqt1c1'Gbqt1c1'Bbqt1c1'$.

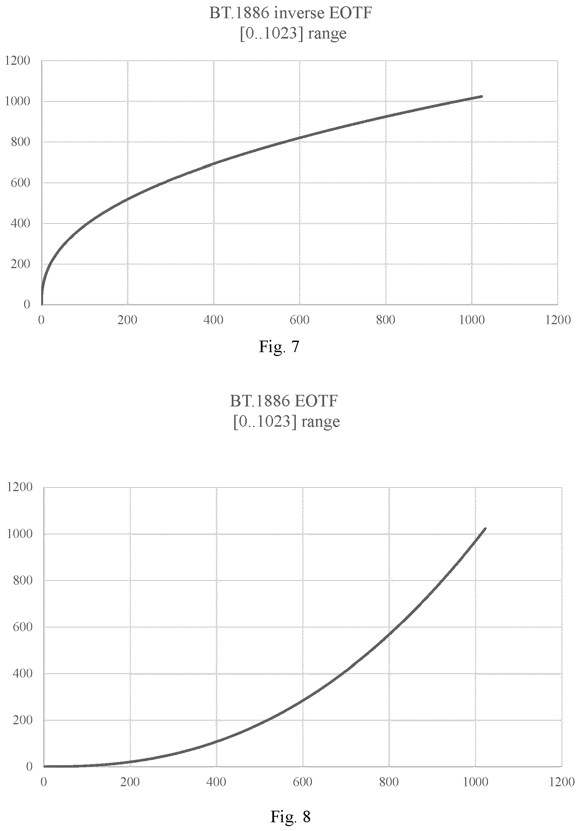

This large amplification in step 48 is due to the very steep shape of the BT. 1886 inverse EOTF *TF4* in very low values. Indeed, as can be seen in **Fig. 7,** at low values, a small difference at the input generates a large difference at the output due to the steepness of the curve.

**Fig. 8** illustrates the BT.1886 EOTF *TF1* in the [0..1023] range.

The following embodiments limit the effect of the quantization on *Vforward* by modifying in an imperceptible way the YUV output *Vforward.* It is indeed possible to calculate an impact of a small modification of the YUV channels of *Vforward* on the RGB of step 48. We propose a method to calculate a modification on YUV Vforward to mitigate RGB error in step 48.

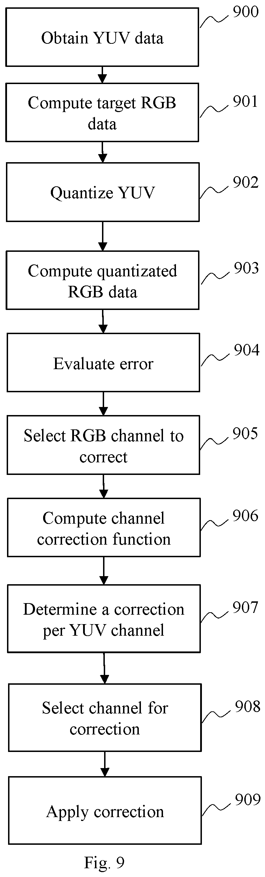

**Fig. 9** illustrates a process for limiting the effects of quantization in a method for converting a first YUV signal with a first transfer function and a first color gamut to a YUV signal with a second transfer function and a second color gamut.

The process of Fig. 9 is for example implemented by the processing module 20 of the color gamut conversion module 11. The process of Fig. 9 is for example applied on the output YUV data *Vforward,* just after step 44 and in any case, before step 45.

In a step 900, the processing module 20 obtains the output YUV data *Vforward.*

In a step 901, the processing module 20 computes target RGB data $RGB_{target}$ from the output YUV data *Vforward.* To do so, the processing module 20 applies successively steps 45, 46, 47 and 48 to the output YUV data *Vforward.*

Taking the example of Fig. 6, $RGB_{target} = \begin{bmatrix} 55.73 \\ 214.44 \\ 591.28 \end{bmatrix}$.

In a step 902, the processing module 20 applies a quantization to the output YUV data *Vforward* to obtain quantized YUV data $Vforward^q$. In an embodiment, the quantization is a rounding to the closest integer. However, in other embodiments, any quantization method or combination of quantization methods can be simulated in step 902.

In a step 903, the processing module 20 computes RGB data $RGB^q_{target}$ from the quantized YUV data $Vforward^q$ applying steps 45, 46, 47 and 48 to the quantized YUV data $Vforward^q$. Taking the example of Fig. 6,

$$RGB^q_{target} = \begin{bmatrix} 39.27 \\ 214.37 \\ 592.59 \end{bmatrix}.$$

In a step 904, the processing module 20 determines an error vector *Δrgb* between the RGB data $RGB_{target}$ and the RGB data $RGB^q_{target}$.

$$\Delta rgb = \begin{bmatrix} r\_RGB_{target} - r\_RGB^q_{target} \\ g\_RGB_{target} - g\_RGB^q_{target} \\ b\_RGB_{target} - b\_RGB^q_{target} \end{bmatrix} = \begin{bmatrix} \Delta r \\ \Delta g \\ \Delta b \end{bmatrix}$$

Where $r\_RGB_{target}$ (respectively $g\_RGB_{target}$, $b\_RGB_{target}$) is the component R (respectively G, B) of the RGB data $RGB_{target}$ and $r\_RGB^q_{target}$ (respectively $g\_RGB^q_{target}$, $b\_RGB^q_{target}$) is the component R (respectively G, B) of the RGB data $RGB^q_{target}$.

Taking the example of Fig. 6, the error vector $\Delta rgb = \begin{bmatrix} 55.73 - 39.27 \\ 214.44 - 214.37 \\ 591.28 - 592.59 \end{bmatrix} = \begin{bmatrix} 16.46 \\ 0.07 \\ -1.31 \end{bmatrix}$.

In a step 905, the processing module 20 selects a RGB channel to correct. In the present embodiment, only colors close to boundaries of the color gamut BT.709 (i.e., CG1 in Fig. 4B) are significantly affected by quantization. Hence, only the channel (i.e., the component) R, G or B of the RGB data $RGB_{target}$ having the smallest value is corrected. Consequently, a single correction function is determined for one color channel. This allow limiting a search for a channel correction function in the next step.

In the example of Fig. 6, the channel of the RGB data $RGB_{target}$ having the smallest value is the channel r (or equivalently R).

In a variant of step 905, other methods for selecting the RGB channel to correct may be applied. For instance, the channel of the RGB data $RGB_{target}$ corresponding to the component of the error vector $\Delta rgb$ with the highest value is selected.

In a variant of step 905, only RGB data $RGB_{target}$ at a distance from a boundary of the CG1 color gamut lower than a minimum distance are corrected. For instance, the minimum distance is "5". If the RGB data $RGB_{target}$ are at a distance lower than the minimum distance from a boundary of the CG1 color gamut, the process of Fig. 9 stops in step 905.

In a step 906, the processing module 20 determines a channel correction functions. A channel correction function for RGB data regarding a Y, U and V channel to correct is needed. An objective in the determination of the channel correction functions is to determine how much the YUV data *Vforward* needs to be modified to mitigate the quantization effect.

In an embodiment, an example of channel correction functions is constituted of partial derivatives of a function *rgb(y,u,v)* allowing converting the YUV data *Vforward* (i.e., $Yf_{t2c2}'Uf_{t2c2}'Vf_{t2c2}'$) into the RGB data $V_{qout'}$ (i.e., $Rbq_{t1c1}'Gbq_{t1c1}'Bbq_{t1c1}'$) with respect to channels y, u and v. The function *rgb(y,u,v)* allowing converting the YUV data *Vforward* into the RGB data $V_{qout'}$ is a concatenation of the functions of steps 45, 46, 47 and 48. The channel correction functions for the function *rgb(y,u,v),* (i.e., the partial derivatives) takes the form of a partial derivative matrix giving a direction and amount of modification needed to mitigate YUV quantization effect. See below the partial derivative matrix *Mrgb* with respect of y,u and v for function *rgb(y,u, v).*

$$Mrgb = \begin{bmatrix} \dfrac{\partial r}{\partial y} & \dfrac{\partial g}{\partial y} & \dfrac{\partial b}{\partial y} \\[2mm] \dfrac{\partial r}{\partial u} & \dfrac{\partial g}{\partial u} & \dfrac{\partial b}{\partial u} \\[2mm] \dfrac{\partial r}{\partial v} & \dfrac{\partial g}{\partial v} & \dfrac{\partial b}{\partial v} \end{bmatrix}$$

Each element of the partial derivative matrix is a channel correction function. In a step 907, the processing module 20 determines a correction vector representing a correction per channel of the YUV data *Vforward.*

A channel error to be corrected is referred as $\Delta c$ and corresponds to the component $\Delta r$, $\Delta g$ or $\Delta b$ of the error vector $\Delta rgb$ corresponding to the RGB channel to be corrected determined in step 905. A channel correction vector is referred as *V_Mrgb* and corresponds to a vector (i.e., a column) of the partial derivative matrix *Mrgb* computed in step 906. The channel correction vector *V_Mrgb* is the vector of the partial derivative matrix *Mrgb* corresponding to the RGB channel to be corrected determined in step 905. For example, if the channel to be corrected is R, $V\_Mrgb = \begin{bmatrix} \dfrac{\partial r}{\partial y} \\[1mm] \dfrac{\partial r}{\partial u} \\[1mm] \dfrac{\partial r}{\partial v} \end{bmatrix}$ . If the channel to be corrected is G, $V\_Mrgb = \begin{bmatrix} \dfrac{\partial g}{\partial y} \\[1mm] \dfrac{\partial g}{\partial u} \\[1mm] \dfrac{\partial g}{\partial v} \end{bmatrix}$ . If the channel to be corrected is B, $V\_Mrgb = \begin{bmatrix} \dfrac{\partial b}{\partial y} \\[1mm] \dfrac{\partial b}{\partial u} \\[1mm] \dfrac{\partial b}{\partial v} \end{bmatrix}$ . With $\Delta c$ and *V_Mrgb,* it is possible to determine a correction to be applied on the components y, u or v of the YUV data *Vforward.* We do this by dividing the selected channel error $\Delta c$ by the channel correction vector *V_Mrgb* as follows to obtain a correction vector *corr_vec:*

$$corr\_vec = \Delta c / V\_Mrgb = \begin{bmatrix} \dfrac{\Delta c}{\dfrac{\partial c}{\partial y}} \\ \dfrac{\Delta c}{\dfrac{\partial c}{\partial u}} \\ \dfrac{\Delta c}{\dfrac{\partial c}{\partial v}} \end{bmatrix}$$

Where *c* is *r, g* or *b.*

In the example of Fig. 6, *c=r,* $\Delta r$ = 16.46 and:

$$V\_Mrgb = \begin{bmatrix} 2.17 \\ -13.23 \\ 29.78 \end{bmatrix}$$

$$corr\_vec = \frac{\Delta r}{V_{Mrgb}} = \begin{bmatrix} \dfrac{\Delta r}{\dfrac{\partial r}{\partial y}} \\ \dfrac{\Delta r}{\dfrac{\partial r}{\partial u}} \\ \dfrac{\Delta r}{\dfrac{\partial r}{\partial v}} \end{bmatrix} = \begin{bmatrix} 16.46/2.17 \\ 16.46/(-13.23) \\ 16.46/29.78 \end{bmatrix} = \begin{bmatrix} 7.59 \\ -1.24 \\ 0.55 \end{bmatrix}$$

In a step 908, the processing module 20 determines one channel y, u or v of the YUV data *Vforward* to be corrected based on the correction vector *corr_vec.* The channel to be corrected is the channel corresponding to the component of the correction vector *corr_vec* with the smallest value. If the component $\dfrac{\Delta c}{\dfrac{\partial c}{\partial y}}$ has the smallest value, the channel y is selected for correction. If the component $\dfrac{\Delta c}{\dfrac{\partial c}{\partial u}}$ has the smallest value, the channel u is selected for correction. If the component $\dfrac{\Delta c}{\dfrac{\partial c}{\partial v}}$ has the smallest value, the channel v is selected for correction.

In the example of Fig. 6, the component of the correction vector *corr_vec* with the smallest value corresponds to the component v.

In a step 909, the processing module 20 apply a correction of the channel y, u or v of the YUV data *Vforward* selected in step 908. The correction consists in adding the smallest component of the correction vector *corr_vec* to the channel y, u or v of the YUV data *Vforward* selected in step 908. The output of step 909 is a corrected YUV data *Vforward_corr.*

In the example of Fig. 6, a corrected component *v_corrected* of the YUV data *Vforward* is obtained as follows from the original component v of the YUV data:

$$v\_corrected = v + \frac{\Delta r}{\dfrac{\partial r}{\partial v}} = 495 + 0.55 = 495.55$$

In an embodiment, the corrected component *v_corrected* of the YUV data *Vforward* is rounded to "496" and *Vforward_corr* = (400,615,496).

Such minor modification of one of the YUV channels of the YUV data *Vforward* (here by only "1") has no visible

**14**

impact on the YUV data *Vforward_corr.* However, it greatly mitigates the error obtained in step 48 (bottom part of Fig. 6). Indeed, corrected RGB data $RGB_{corr}$ (i.e. corresponding to *Rbqt1c1'Gbqt1c1'Bbqt1c1'* outputted by step 48) are now equal to (60.59,213.42,592.60) which is much closer to the target RGB data $RGB_{target}$= (55.72,214.44,591.27) than the uncorrected version $RGB_{target}^q = (39.27,214.37,592.59)$. The error decreased from (16.46,0.07, -1.31) to (-4.87, -1.02, -1.32).

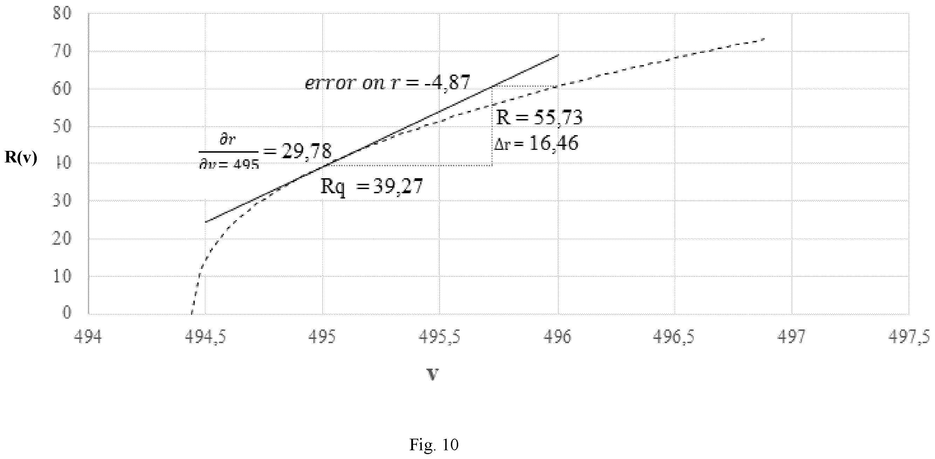

**Fig. 10** provides an illustration of the process for limiting the effects of quantization of Fig. 9 apply in the context of the example of Fig. 6.

Fig. 10 shows that by changing the value of the channel v from "495" to "496" the error on the channel r is reduced. The black straight line is the derivative for the channel r of the function *rgb(y,u,v)* with respect of the channel v at position "495". The curved dashed line R(v) represents the channel r of the function *rgb(y,u,v) depending on* v. *R* represents the channel R of the RGB data $RGB_{target}$. *Rq* represents the channel R of the RGB data $RGB_{target}^q$.

One can note that the proposed process for limiting the effects of quantization of Fig. 9 applies for color gamuts different from BT.709 and BT.2020. A condition is that the color gamut of the output (i.e., $Yf_{t2c2}'Uf_{t2c2}'Vf_{t2c2}'$) of the forward conversion (illustrated in Fig. 4A and in the top part of Fig. 5) and of the input ($Yb_{t2c2}'Ub_{t2c2}'Vb_{t2c2}'$) of the backward conversion (illustrated in Fig. 4B and in the middle and bottom part of Fig. 5) is bigger than the color gamut of the input ($Rf_{t1c1}'Gf_{t1c1}'Bf_{t1c1}'$) of the forward conversion and of the output ($Rb_{t1c1}'Gb_{t1c1}'Bb_{t1c1}'$) of the backward conversion.

In addition, one can note that the proposed process for limiting the effects of quantization of Fig. 9 applies for different transfer functions, other than BT.1886 and PQ, if the non-linear converter allowing a linear *LD* to *NLD1* conversion in step 48 has a very steep shape for low values.

We described above a number of embodiments. Features of these embodiments can be provided alone or in any combination. Further, embodiments can include one or more of the following features, devices, or aspects, alone or in any combination, across various claim categories and types:

- A bitstream or signal that includes one or more of the described video content with converted color gamut, or variations thereof.
- Creating and/or transmitting and/or receiving and/or decoding a bitstream or signal that includes one or more of the described video content with converted color gamut, or variations thereof.
- A server, camera, TV, set-top box, cell phone, tablet, personal computer or other electronic device that performs at least one of the embodiments described.
- A TV, set-top box, cell phone, tablet, personal computer or other electronic device that performs at least one of the embodiments described, and that displays (e.g. using a monitor, screen, or other type of display) a resulting picture.
- A TV, set-top box, cell phone, tablet, personal computer or other electronic device that tunes (e.g. using a tuner) a channel to receive a signal including an encoded video content with converted color gamut, and performs at least one of the embodiments described.
- A TV, set-top box, cell phone, tablet, or other electronic device that receives (e.g. using an antenna) a signal over the air that includes a video content with converted color gamut, and performs at least one of the embodiments described.
- A server, camera, cell phone, tablet, personal computer or other electronic device that tunes (e.g. using a tuner) a channel to transmit a signal including a video content with converted color gamut, and performs at least one of the embodiments described.
- A server, camera, cell phone, tablet, personal computer or other electronic device that transmits (e.g. using an antenna) a signal over the air that includes a video content with converted color gamut, and performs at least one of the embodiments described.

**Claims**

1. A method comprising:

   obtaining (900) YUV data resulting from a conversion of a YUV signal with a first transfer function and a first color gamut to a YUV signal with a second transfer function and a second color gamut;
   converting (901) the YUV data in first RGB data with the first transfer function and the first color gamut;
   converting (902, 903) a quantized version of the YUV data into second RGB data with the first transfer function and the first color gamut;
   determining (904) an error vector between the first and the second RGB data;
   selecting (905) a channel of the first RGB data to correct from respective values of channels of the first RGB data;
   determining (906) a channel correction matrix from partial derivatives of a function allowing converting a YUV signal with the second transfer function and the second color gamut in a RGB signal with the first transfer function and the first color gamut;

determining (907) a correction vector representing a correction per channel of the YUV data from the channel correction matrix and from a component of the error vector depending on the selected channel of the first RGB data to correct;

determining (908) one channel of the YUV data to be corrected from a smallest value of component of the correction vector; and applying a correction corresponding to the smallest value to the determined channel of the YUV data.

2. The method of claim 1 wherein, during the selecting (905) of a channel of the first RGB data to correct from respective values of channels of the first RGB data, the selected channel corresponds to the channel of the first RGB data having a lowest value.

3. The method of claim 1 or 2 wherein the partial derivatives are computed with respect to channels Y, U and V of the YUV data.

4. The method of any previous claim wherein the selecting of a channel of the first RGB data to correct from respective values of channels of the first RGB data considers a relative position of the first RGB data from boundaries of the first color gamut.

5. The method of any previous claim wherein the determining (907) of the correction vector comprises dividing the component of the error vector corresponding to the selected channel of the first RGB data to correct by a column of the channel correction matrix corresponding to the selected channel of the first RGB data to correct.

6. The method of any previous claim wherein the second color gamut is larger than the first color gamut.

7. A device comprising electronic circuity configured for:

obtaining (900) YUV data resulting from a conversion of a YUV signal with a first transfer function and a first color gamut to a YUV signal with a second transfer function and a second color gamut;

converting (901) the YUV data in first RGB data with the first transfer function and the first color gamut;

converting (902, 903) a quantized version of the YUV data into second RGB data with the first transfer function and the first color gamut;

determining (904) an error vector between the first and the second RGB data;

selecting (905) a channel of the first RGB data to correct from respective values of channels of the first RGB data;

determining (906) a channel correction matrix from partial derivatives of a function allowing converting a YUV signal with the second transfer function and the second color gamut in a RGB signal with the first transfer function and the first color gamut;

determining (907) a correction vector representing a correction per channel of the YUV data from the channel correction matrix and from a component of the error vector corresponding to the selected channel of the first RGB data to correct;

determining (908) one channel of the YUV data to be corrected from a smallest value of component of the correction vector; and applying a correction corresponding to the smallest value to the determined channel of the YUV data.

8. The device of claim 7 wherein, during the selecting (905) of a channel of the first RGB data to correct from respective values of channels of the first RGB data, the selected channel corresponds to the channel of the first RGB data having a lowest value.

9. The device of claim 7 or 8 wherein the partial derivatives are computed with respect to channels Y, U and V of the YUV data.

10. The device of any previous claim from claim 7 to 9 wherein the selecting of a channel of the first RGB data to correct from respective values of channels of the first RGB data considers a relative position of the first RGB data from boundaries of the first color gamut.

11. The device of any previous claim from claim 7 to 10 wherein the determining (907) of the correction vector comprises dividing the component of the error vector corresponding to the selected channel of the first RGB data to correct by a column of the channel correction matrix corresponding to the selected channel of the first RGB data to correct.

12. The device of any previous claim from claim 7 to 11 wherein the second color gamut is larger than the first color gamut.

13. A computer program comprising program code instructions for implementing the method according to any previous claim from claim 1 to 6.

14. Non-transitory information storage medium storing program code instructions for implementing the method according to any previous claims from claim 1 to 6.

Fig. 1

Fig. 2A

RF, COMP,
USB, HDMI

22

205

20

11

21

Communication channel

Fig. 2B

16

26

27

Display

Speakers

Peripherals

RF, COMP,
USB, HDMI

Display
Interface

Audio
Interface

Peripheral
Interface

22

23

24

25

205

20

15

21

Communication channel

Fig. 2C

Fig. 3

**Fig. 4A**

$Yf_{f1c1}'Uf_{f1c1}'Vf_{f1c1}'$ NLD1 CG1 → **40** YUV To RGB → $Rf_{f1c1}'Gf_{f1c1}'Bf_{f1c1}'$ NLD1 CG1 → **41** NLD1 To linear → $Rf_{lc1}Gf_{lc1}Bf_{lc1}$ linear CG1 → **42** RGB CG1 To RGB CG2 → $Rf_{lc2}Gf_{lc2}Bf_{lc2}$ linear CG2 → **43** linear To NLD2 → $Rf_{f2c2}'Gf_{f2c2}'Bf_{f2c2}'$ NLD2 CG2 → **44** RGB To YUV → $Yf_{f2c2}'Uf_{f2c2}'Vf_{f2c2}'$ NLD2 CG2

**Fig. 4B**

$Yb_{f2c2}'Ub_{f2c2}'Vb_{f2c2}'$ NLD2 CG2 → **45** YUV To RGB → $Rb_{f2c2}'Gb_{f2c2}'Bb_{f2c2}'$ NLD2 CG2 → **46** NLD2 To linear → $Rb_{lc2}Gb_{lc2}Bb_{lc2}$ linear CG2 → **47** RGB CG2 To RGB CG1 → $Rb_{lc1}Gb_{lc1}Bb_{lc1}$ linear CG1 → **48** linear To NLD1 → $Rb_{f1c1}'Gb_{f1c1}'Bb_{f1c1}'$ NLD1 CG1 → **49** RGB To YUV → $Yb_{f1c1}'Ub_{f1c1}'Vb_{f1c1}'$ NLD1 CG1

Fig. 5

Fig. 6

Vin' — Rf$_{f1c1}$'Gf$_{f1c1}$'Bf$_{f1c1}$' BT.1886 BT.709 — 55.73 / 214.44 / 591.28

**41** BT.1886 To linear

Rf$_{f1c1}$Gf$_{f1c1}$Bf$_{f1c1}$ linear BT.709 — 0.95 / 24.06 / 274.46

**42** RGB BT.709 To RGB BT.2020

Rf$_{f1c2}$Gf$_{f1c2}$Bf$_{f1c2}$ linear BT.2020 — 20.40 / 25.31 / 247.94

**43** linear To PQ

Rf$_{f2c2}$'Gf$_{f2c2}$'Bf$_{f2c2}$' PQ BT.2020 — 364.26 / 384.26 / 613.07

**44** RGB To YUV BT.2020

Yf$_{f2c2}$'Uf$_{f2c2}$'Vf$_{f2c2}$' PQ BT.2020 — 400.33 / 614.56 / 495.49 — Vforward

**50** Q

Vforward — 400.33 / 614.56 / 495.49

**45** YUV To RGB BT.2020

Rb$_{f2c2}$'Gb$_{f2c2}$'Bb$_{f2c2}$' PQ BT.2020 — 364.26 / 384.26 / 613.07

**46** PQ To linear

Rb$_{l1c1}$Gb$_{l1c1}$Bb$_{l1c1}$ linear BT.2020 — 20.40 / 25.31 / 247.94

**47** RGB BT.2020 To RGB BT.709

Rb$_{l1c1}$Gb$_{l1c1}$Bb$_{l1c1}$ linear BT.709 — 0.95 / 24.06 / 274.46

**48** linear To BT.1886

Rb$_{f1c1}$'Gb$_{f1c1}$'Bb$_{f1c1}$' BT.1886 BT.709 — 55.73 / 214.44 / 591.28 — Vout'

Ybq$_{f2c2}$'Ubq$_{f2c2}$'Vbq$_{f2c2}$' PQ BT.2020 — 400 / 615 / 495

**45** YUV To RGB BT.2020

Rbq$_{f2c2}$'Gbq$_{f2c2}$'Bbq$_{f2c2}$' PQ BT.2020 — 363.76 / 384.12 / 613.63

**46** PQ To linear

Rbq$_{l1c1}$Gbq$_{l1c1}$Bbq$_{l1c1}$ linear BT.2020 — 20.12 / 25.27 / 249.23

**47** RGB BT.2020 To RGB BT.709

Rbq$_{l1c1}$Gbq$_{l1c1}$Bbq$_{l1c1}$ linear BT.709 — 0.409 / 24.04 / 275.92

**48** linear To BT.1886

Rbq$_{f1c1}$'Gbq$_{f1c1}$'Bbq$_{f1c1}$' BT.1886 BT.709 — 39.27 / 214.37 / 592.59 — Vqout'

23

BT.1886 inverse EOTF
[0..1023] range

Fig. 7

BT.1886 EOTF
[0..1023] range

Fig. 8

Obtain YUV data — 900

Compute target RGB data — 901

Quantize YUV — 902

Compute quantizated RGB data — 903

Evaluate error — 904

Select RGB channel to correct — 905

Compute channel correction function — 906

Determine a correction per YUV channel — 907

Select channel for correction — 908

Apply correction — 909

Fig. 9

Fig. 10

Europäisches
Patentamt
European
Patent Office
Office européen
des brevets

# EUROPEAN SEARCH REPORT

Application Number

EP 24 30 6832

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2024/078887 A1 (INTERDIGITAL CE PATENT HOLDINGS SAS [FR]) 18 April 2024 (2024-04-18) * page 15, line 6 - page 28, line 12; figures 1-5, 14 * | 1-14 | INV. H04N9/67 H04N9/68 |
| A | WO 2023/144091 A1 (INTERDIGITAL VC HOLDINGS FRANCE SAS [FR]) 3 August 2023 (2023-08-03) * page 16, line 24 - page 26, line 14; figures 1-5, 16 * | 1-14 | |
| A | US 2019/068969 A1 (RUSANOVSKYY DMYTRO [US] ET AL) 28 February 2019 (2019-02-28) * paragraph [0079] - paragraph [0157]; figures 1,4-7 * | 1-14 | |
| A | CN 111 435 990 A (HUAWEI TECH CO LTD; UNIV OF CAMBRIDGE) 21 July 2020 (2020-07-21) * paragraph [0111] - paragraph [0197]; figures 1-7 * | 1-14 | |

TECHNICAL FIELDS
SEARCHED (IPC)

H04N

The present search report has been drawn up for all claims

| Place of search | Date of completion of the search | Examiner |
|---|---|---|
| Munich | 20 March 2025 | Seytter, Fritz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6832

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | | Publication date | Patent family member(s) | | Publication date |
|---|---|---|---|---|---|
| WO 2024078887 | A1 | 18-04-2024 | TW | 202420806 A | 16-05-2024 |
| | | | WO | 2024078887 A1 | 18-04-2024 |
| WO 2023144091 | A1 | 03-08-2023 | KR | 20240142440 A | 30-09-2024 |
| | | | WO | 2023144091 A1 | 03-08-2023 |
| US 2019068969 | A1 | 28-02-2019 | AU | 2018322042 A1 | 06-02-2020 |
| | | | BR | 112020003037 A2 | 04-08-2020 |
| | | | CN | 110999299 A | 10-04-2020 |
| | | | EP | 3673652 A1 | 01-07-2020 |
| | | | KR | 20200037272 A | 08-04-2020 |
| | | | SG | 11202000296T A | 30-03-2020 |
| | | | TW | 201921928 A | 01-06-2019 |
| | | | US | 2019068969 A1 | 28-02-2019 |
| | | | WO | 2019040502 A1 | 28-02-2019 |
| CN 111435990 | A | 21-07-2020 | NONE | | |

EPO FORM P0459

For more details about this annex : see Official Journal of the European Patent Office, No. 12/82